(19) Europäisches Patentamt
European Patent Office
Office européen des brevets

(11) **EP 2 775 647 A1**

(12) **EUROPEAN PATENT APPLICATION**
published in accordance with Art. 153(4) EPC

(43) Date of publication:
**10.09.2014 Bulletin 2014/37**

(51) Int Cl.:
*H04J 99/00* (2009.01)     *H04B 7/02* (2006.01)
*H04B 7/08* (2006.01)     *H04J 11/00* (2006.01)

(21) Application number: **12845614.2**

(86) International application number:
**PCT/JP2012/078470**

(22) Date of filing: **02.11.2012**

(87) International publication number:
**WO 2013/065821 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2011   JP 2011242911**

(71) Applicant: **NTT DOCOMO, INC.**
**Chiyoda-ku**
**Tokyo 100-6150 (JP)**

(72) Inventors:
• **SAGAE, Yuta**
**Tokyo 100-6150 (JP)**
• **OHWATARI, Yusuke**
**Tokyo 100-6150 (JP)**
• **MIKI, Nobuhiko**
**Tokyo 100-6150 (JP)**

(74) Representative: **HOFFMANN EITLE**
**Patent- und Rechtsanwälte**
**Arabellastrasse 4**
**81925 München (DE)**

(54) **RECEIVER**

(57) Provided is a receiver to improve the accuracy of estimating a covariance matrix $R_{I+N}$ based on a data signal. In an IRC receiver 10 according to the present invention, a data signal is configured to be transmitted in an SFBC pair including two resource elements, an estimated covariance matrix $R_{I+N}$ is configured to include a first covariance matrix $R_{I+N}$ (2m) including a desired signal component in even-numbered resource elements in the SFBC pair and a second covariance matrix $R_{I+N}$ (2m+1) including a desired signal component in odd-numbered resource elements in the space frequency block coding scheme unit, and a covariance matrix averaging unit 13 and a covariance matrix generation unit 16 are configured to perform, as the aforementioned predetermined process, an averaging process on each of elements in the first covariance matrix $R_{I+N}$ (2m) and elements in the second covariance matrix $R_{I+N}$ (2m+1).

FIG. 1

**Description**

[Technical Field]

The present invention relates to a receiver.

[Background Art]

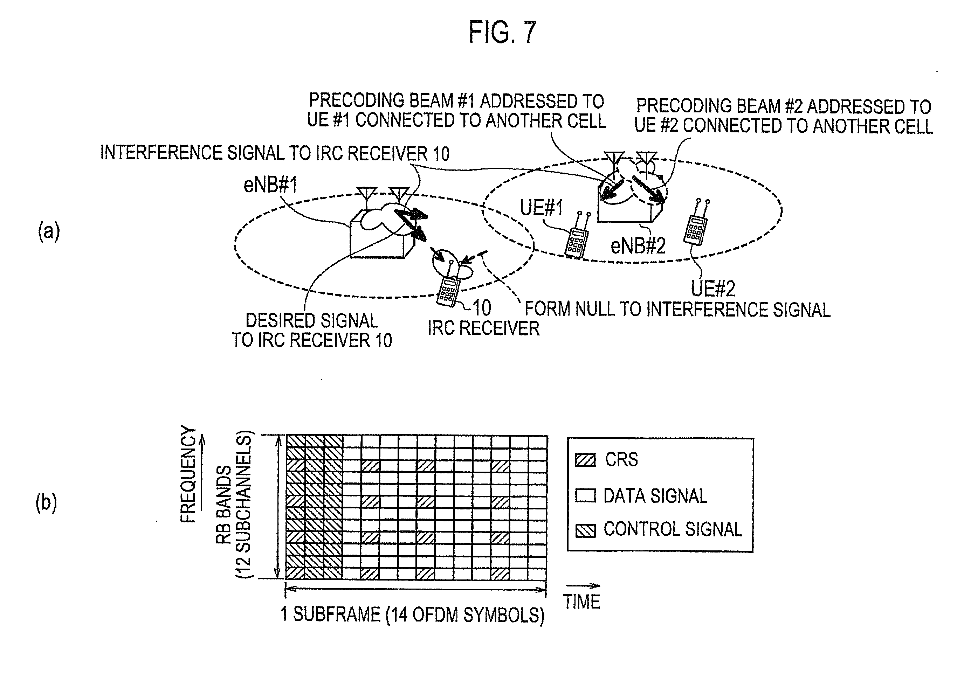

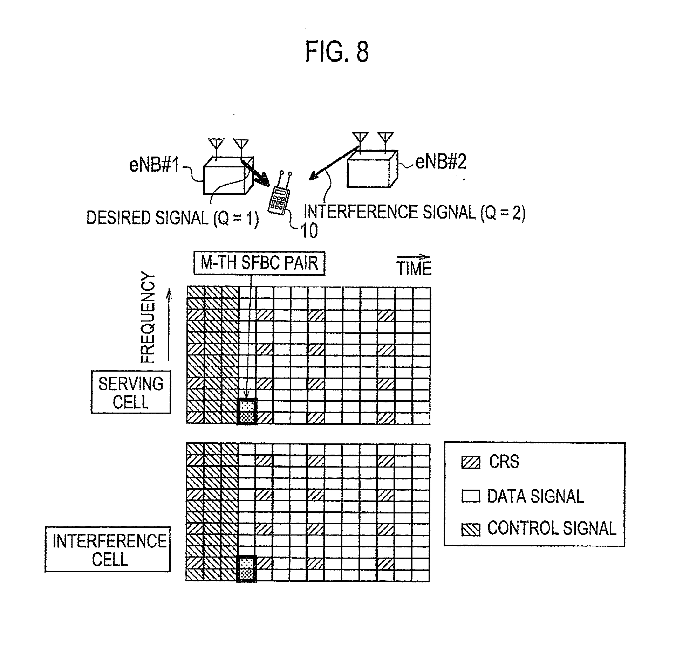

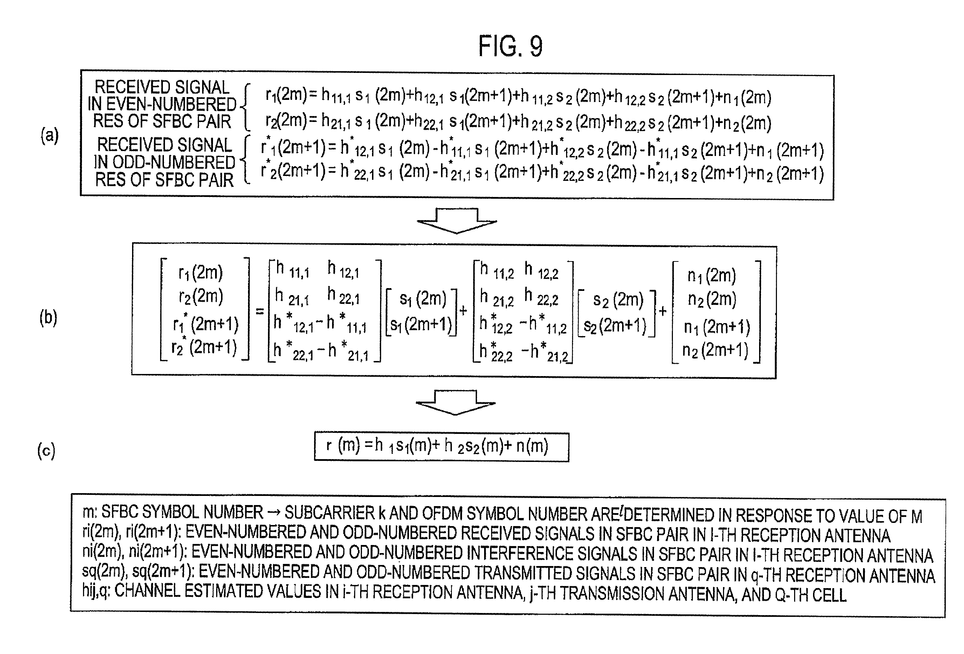

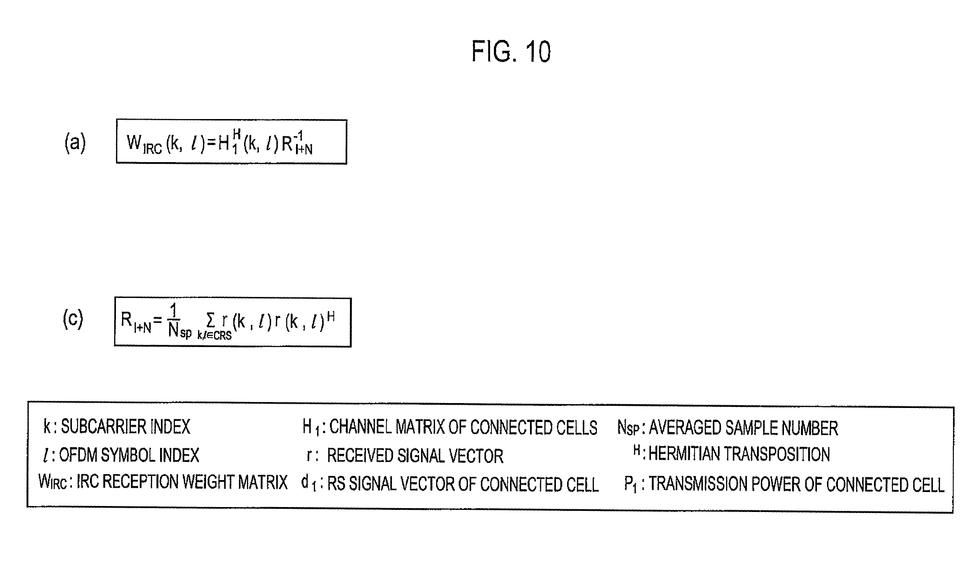

In an LTE (Long Term Evolution) scheme, in a downlink, as one of methods of improving cell-edge throughput, an IRC (Interference Rejection Combining) receiver is discussed which suppresses a beam of another mobile station UE causing interference.
As illustrated in Fig. 7(a), an object of an IRC receiver 10 is to improve the reception quality of a desired signal while suppressing an interference signal.
Furthermore, an LTE (Release-8) scheme is so configured that in order to perform estimation of a channel state (CSI: Channel State Information), to demodulate a data signal and a control signal, and to measure reception quality in a cell, CRS (Cell-Specific Reference Signal) is transmitted.
Specifically, in the LTE (Release-8) scheme, the CRS is configured to be transmitted together with a data signal and a control signal by a configuration illustrated in Fig. 7(b). It is noted that it is possible to set the CRS to a maximum of four antennas.
Furthermore, in the LTE scheme, an SFBC (Space Frequency Block Coding) scheme is configured to be used as a transmit diversity scheme.
Furthermore, "Alamouti coding" capable of obtaining maximum diversity gain corresponding to maximum ratio combining at a symbol level is configured to be used. That is, coding is configured to be performed using two resource elements (REs: Resource Elements) in a frequency direction. In the present specification, the two resource elements are called an "SFBC pair".
Hereinafter, as illustrated in Fig. 8, a description will be provided for a received signal model in the IRC receiver 10 when channel variation is ignored in the case in which the IRC receiver 10 receives a desired signal from a cell 1 (q=I) and receives an interference signal from a cell 2 (q=2).
Specifically, according to Equations illustrated in Fig. 9(a) to Fig. 9(c), it is possible to express a received signal $r_1$ (2m) in even-numbered resource elements of an SFBC pair m in a reception antenna 1 (i=1) of the IRC receiver 10, a received signal $r_2$ (2m) in even-numbered resource elements of an SFBC pair m in a reception antenna 2 (i=2) of the IRC receiver 10, a received signal $r_1^*$ (2m+1) in odd-numbered resource elements of the SFBC pair m in the reception antenna 1 (i=1) of the IRC receiver 10, and a received signal $r_2^*$ (2m+1) in odd-numbered resource elements of the SFBC pair m in the reception antenna 2 (i=2) of the IRC receiver 10. Furthermore, "*" indicates a complex conjugate.
Furthermore, conventionally, in order to suppress interference, a technology for performing a reception process by using an MMSE (Minimum Mean Square Error) spatial filtering scheme has been known.
Such a technology is configured to generate an IRC reception weight $W_{IRC}$ (k, 1) as illustrated in Fig. 10(a). Furthermore, when generating the IRC reception weight $W_{IRC}$ (k, 1), a method of estimating a covariance matrix $R_{I+N}$ based on a data signal (PDSCH) illustrated in Fig. 10(b) is used (see Non Patent Literature 1).

[Citation List]

[Non Patent Literature]

[NPL 1] 3GPP contribution R4-115213

[Summary of Invention]

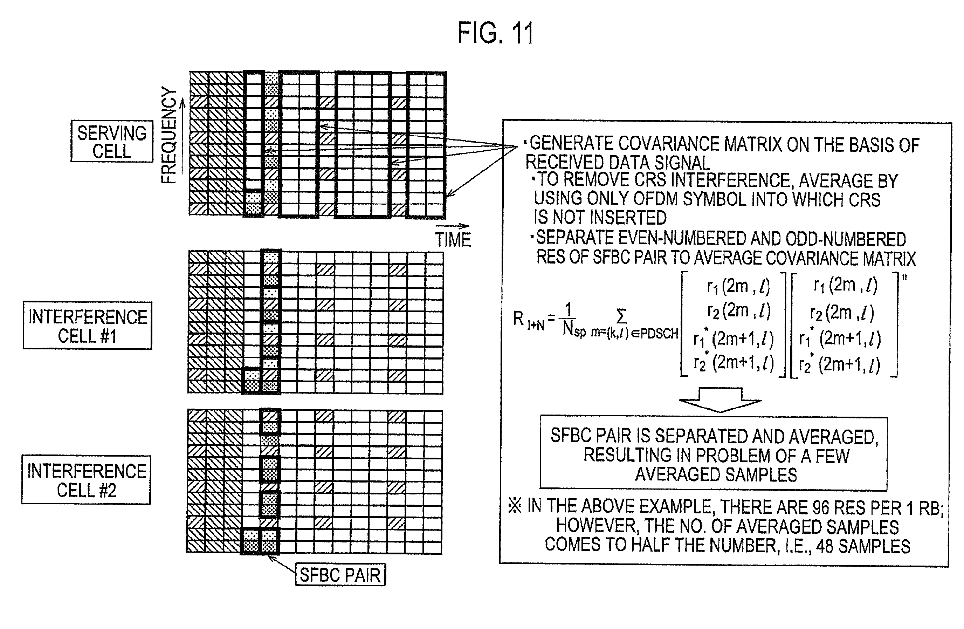

That is, in such a technology, the IRC receiver 10 is configured to generate a covariance matrix $R_{I+N}$ on the basis of a data signal received in a serving cell (cell 1) as illustrated in Fig. 11.
Specifically, in order to prevent the influence of interference due to CRS transmitted in interference cells #1 and #2, the IRC receiver 10 is considered to average only a data signal in an OFDM symbol through which the CRS is not transmitted.
Furthermore, it is considered that the IRC receiver 10 separates and averages even-numbered resource elements of the SFBC pair and odd-numbered resource elements of the SFBC pair, thereby generating the covariance matrix $R_{I+N}$.
Furthermore, in such a technology, it is considered to separate and average the even-numbered resource elements of the SFBC pair and the odd-numbered resource elements of the SFBC pair, resulting in a problems that the number of samples used in an averaging process is reduced, the accuracy of estimating the covariance matrix $R_{I+N}$ is lowered, it is not possible to generate an accurate IRC reception weight, and the accuracy of suppressing interference in the IRC receiver 10 is lowered.

Therefore, the present invention has been achieved in view of the above-described problems, and an object thereof is to provide a receiver capable of improving the accuracy of estimating a covariance matrix $R_{I+N}$ based on a data signal.

A first characteristic of the present invention is summarized in that a receiver, which receives a data signal and a control signal transmitted using a space frequency block coding scheme, comprising: a covariance matrix estimation unit that estimates a covariance matrix on the basis of the data signal; a covariance matrix generation unit that performs a predetermined process on the estimated covariance matrix; a reception weight generation unit that generates a reception weight by using the covariance matrix subjected to the predetermined process and the control signal; and a signal separation unit that separates the data signal from a received signal by using the generated reception weight and the control signal, wherein the data signal is configured to be transmitted in a space frequency block coding scheme unit including two resource elements, the estimated covariance matrix is configured to include a first covariance matrix including a desired signal component in an even-numbered resource element in the space frequency block coding scheme unit and a second covariance matrix including a desired signal component in an odd-numbered resource element in the space frequency block coding scheme unit, and the covariance matrix generation unit is configured to perform, as the predetermined process, an averaging process on each of elements in the first covariance matrix and elements in the second covariance matrix.

A second characteristic of the present invention is summarized in that a receiver, which receives a data signal and a control signal transmitted using a space frequency block coding scheme, comprising: a covariance matrix estimation unit that estimates a covariance matrix on the basis of the data signal; a covariance matrix generation unit that performs a predetermined process on the estimated covariance matrix; a reception weight generation unit that generates a reception weight by using the covariance matrix subjected to the predetermined process and the control signal; and a signal separation unit that separates the data signal from a received signal by using the generated reception weight and the control signal, wherein the covariance matrix generation unit is configured to perform, as the predetermined process, a process of inserting "0" into an element, which is theoretically to "0", when channel variation is ignored, in the estimated covariance matrix.

A third characteristic of the present invention is summarized in that a receiver, which receives a data signal and a control signal transmitted using a space frequency block coding scheme, comprising: a covariance matrix estimation unit that estimates a covariance matrix on the basis of the data signal; a covariance matrix generation unit that performs a predetermined process on the estimated covariance matrix; a reception weight generation unit that generates a reception weight by using the covariance matrix subjected to the predetermined process and the control signal; and a signal separation unit that separates the data signal from a received signal by using the generated reception weight and the control signal, wherein the covariance matrix generation unit is configured to perform, as the predetermined process, an averaging process among elements, which are theoretically expressed by one parameter, when channel variation is ignored, in the estimated covariance matrix.

A fourth characteristic of the present invention is summarized in that a receiver, which receives a data signal and a control signal transmitted using a space frequency block coding scheme, comprising: a covariance matrix estimation unit that estimates a covariance matrix on the basis of the data signal; a covariance matrix generation unit that performs a predetermined process on the estimated covariance matrix; a reception weight generation unit that generates a reception weight by using the covariance matrix subjected to the predetermined process and the control signal; and a signal separation unit that separates the data signal from a received signal by using the generated reception weight and the control signal, wherein the covariance matrix generation unit is configured to perform, as the predetermined process, a process of inserting "0" into an element, which is theoretically expressed by one parameter, when channel variation is ignored, in the estimated covariance matrix.

[Brief Description of Drawings]

[Fig. 1] Fig. 1 is a functional block diagram of an IRC receiver according to a first embodiment of the present invention.
[Fig. 2] Fig. 2 is a diagram for explaining a method of calculating a covariance matrix in the IRC receiver according to the first embodiment of the present invention.
[Fig. 3] Fig. 3 is a diagram for explaining the method of calculating the covariance matrix in the IRC receiver according to the first embodiment of the present invention.
[Fig. 4] Fig. 4 is a diagram for explaining the method of calculating the covariance matrix in the IRC receiver according to the first embodiment of the present invention.

[Fig. 5] Fig. 5 is a diagram for explaining the method of calculating the covariance matrix in the IRC receiver according to the first embodiment of the present invention.
[Fig. 6] Fig. 6 is a diagram for explaining the method of calculating the covariance matrix in the IRC receiver according to the first embodiment of the present invention.
[Fig. 7] Fig. 7 is a diagram for explaining a conventional technology.
[Fig. 8] Fig. 8 is a diagram for explaining a conventional technology.
[Fig. 9] Fig. 9 is a diagram for explaining a conventional technology.
[Fig. 10] Fig. 10 is a diagram for explaining a conventional technology.
[Fig. 11] Fig. 11 is a diagram for explaining a conventional technology.

[Description of Embodiments]

(Mobile communication system according to first embodiment of the present invention)

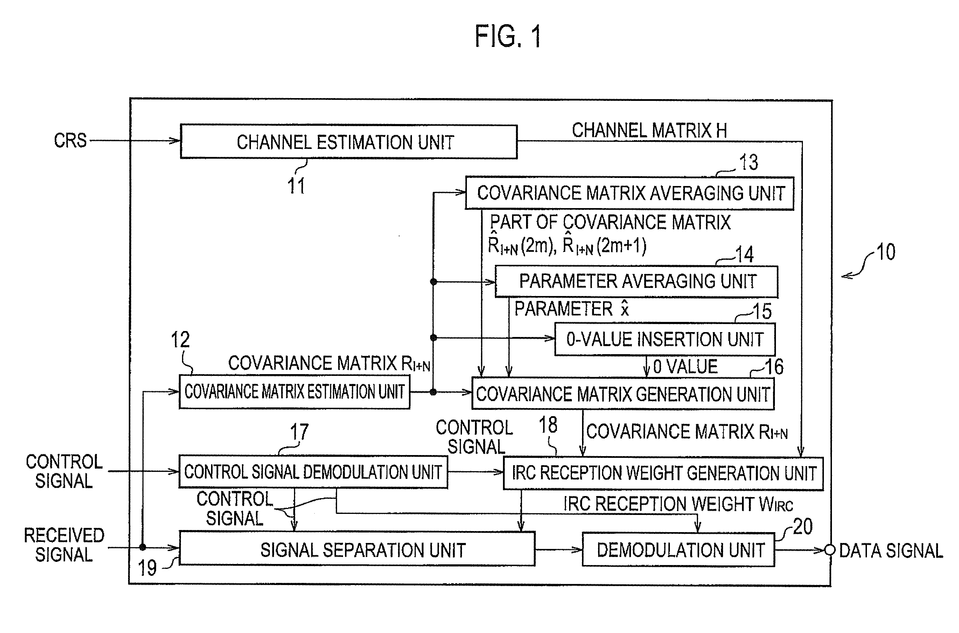

With reference to Fig. 1 to Fig. 6, an IRC receiver 10 according to a first embodiment of the present invention will be described.

As illustrated in Fig. 1, the IRC receiver 10 according to the present embodiment includes a channel estimation unit 11, a covariance matrix estimation unit 12, a covariance matrix averaging unit 13, a parameter averaging unit 14, a 0-value insertion unit 15, a covariance matrix generation unit 16, a control signal demodulation unit 17, an IRC reception weight generation unit 18, a signal separation unit 19, and a demodulation unit 20.

The channel estimation unit 11 is configured to perform a channel estimation process on the basis of CRS received from a serving cell (cell 1), so as to estimate (calculate) a channel matrix H.

The covariance matrix estimation unit 12 is configured to estimate a covariance matrix $R_{I+N}$ on the basis of a data signal. Specifically, the covariance matrix estimation unit 12 is configured to estimate (calculate) the covariance matrix $R_{I+N}$ by using Equation illustrated in Fig. 10(b).

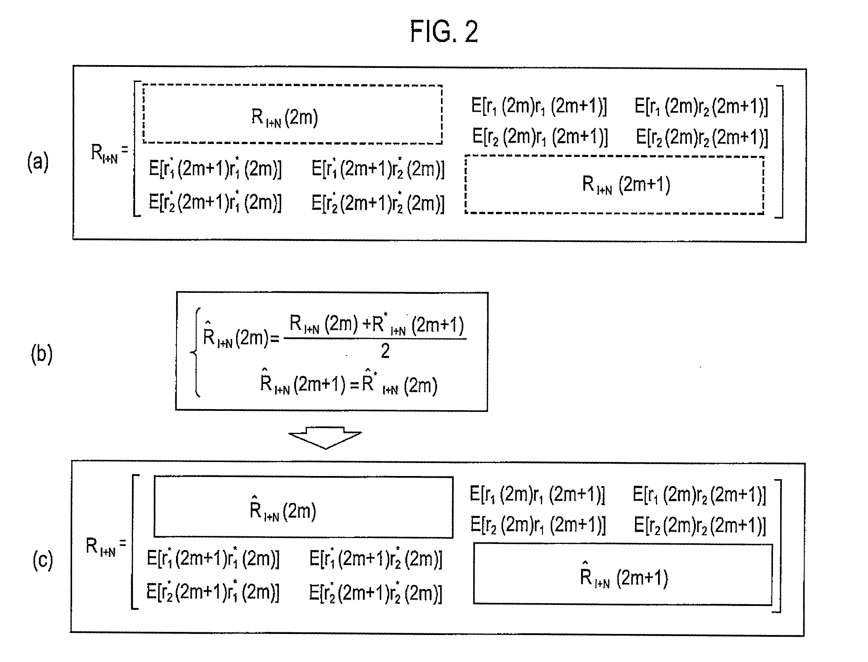

The covariance matrix $R_{I+N}$ estimated (calculated) by the covariance matrix estimation unit 12 includes a first covariance matrix $R_{I+N}$ (2m) including a desired signal component in even-numbered resource elements in an SFBC pair and a second covariance matrix $R_{I+N}$ (2m+1) including a desired signal component in odd-numbered resource elements in the SFBC pair as illustrated in Fig. 2(a).

Furthermore, when an SFBC scheme is used, it has been known that a relation of $R_{I+N}$ (2m) = $R^{*}_{I+N}$ (2m+1) is theoretically satisfied.

In consideration of this point, the covariance matrix averaging unit 13 is configured to perform an averaging process on each of elements in the first covariance matrix $R_{I+N}$ (2m) and elements in the second covariance matrix $R_{I+N}$ (2m+1) by using Equation illustrated in Fig. 2(b). As a result,

[Math. 1]

$$\bar{R}_{I+N}(2m), \bar{R}_{I+N}(2m+1)$$

is acquired.

The covariance matrix generation unit 16 may be configured to perform a process (a predetermined process) of changing each of the elements in the first covariance matrix $R_{I+N}$ (2m) and the elements in the second covariance matrix $R_{I+N}$ (2m+1), which are included in the covariance matrix $R_{I+N}$ estimated (calculated) by the covariance matrix estimation unit 12, into elements of Equation 2 received from the covariance matrix averaging unit 13,

[Math. 2]

$$\tilde{R}_{I+N}(2m), \tilde{R}_{I+N}(2m+1)$$

as illustrated in Fig. 2(c).

The averaging process using Equation illustrated in Fig. 2(b) is performed, and thereby, it is possible to obtain an effect equivalent to that which is obtained when the number of samples that are used in the averaging process is doubled when estimating the covariance matrix $R_{I+N}$, and to improve the accuracy of estimating the covariance matrix $R_{I+N}$ based on the data signal.

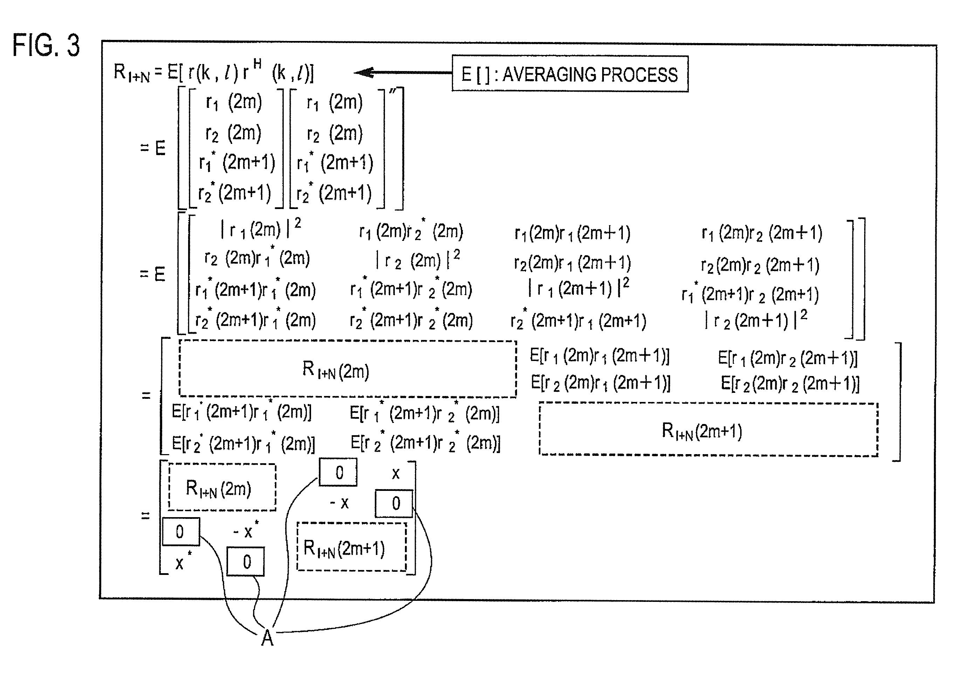

Furthermore, the covariance matrix $R_{I+N}$, when channel variation is ignored, is theoretically expressed by Equation illustrated in Fig. 3. Furthermore, as illustrated in Fig. 3, elements A in the covariance matrix $R_{I+N}$ are known to be theoretically "0" when the channel variation is ignored.

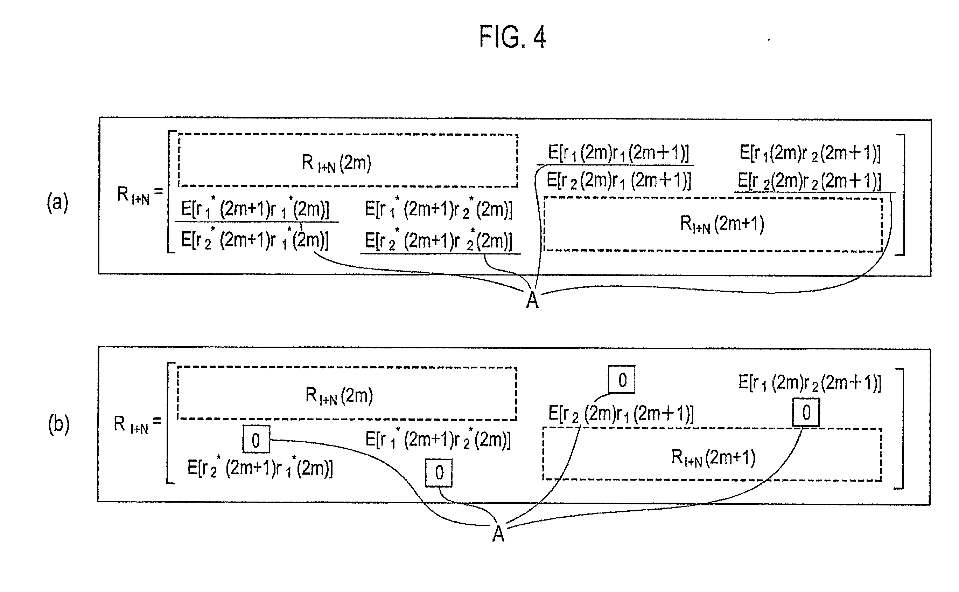

In consideration of this point, the 0-value insertion unit 15 is configured to instruct the covariance matrix generation unit 16 to insert "0" into the elements A, which are theoretically to "0", when the channel variation is ignored, in the covariance matrix $R_{I+N}$ estimated by the covariance matrix estimation unit 12 and illustrated in Fig. 4(a).

The covariance matrix generation unit 16 may also be configured to perform a process (a predetermined process) of inserting "0" into the elements A in the covariance matrix $R_{I+N}$, which is estimated by the covariance matrix estimation unit 12 and is illustrated in Fig. 4(a), in response to the instruction from the 0-value insertion unit 15, as illustrated in Fig. 4(b).

The predetermined process illustrated in Fig. 4(b) is performed, that is, "0" is inserted into the elements A to be theoretically to "0", so that it is possible to improve the accuracy of estimating the covariance matrix $R_{I+N}$ based on the data signal while reducing a calculation amount.

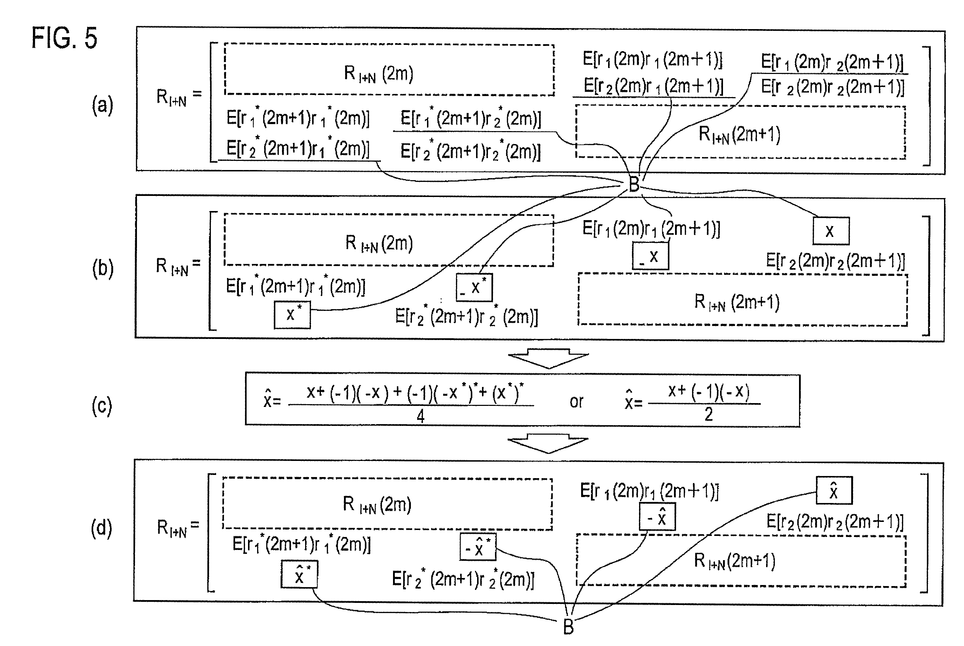

Furthermore, as illustrated in Fig. 5(a) and Fig. 5(b), elements B in the covariance matrix $R_{I+N}$ estimated by the covariance matrix estimation unit 12 are theoretically expressed by one parameter x when the channel variation is ignored.

In consideration of this point, the parameter averaging unit 14 is configured to perform an averaging process among the aforementioned elements B by using Equation illustrated in Fig. 5(c). As a result,

[Math. 3]

$$\tilde{\tilde{\mathbf{x}}}$$

is acquired.

The covariance matrix generation unit 16 may also be configured to change each of the elements B, which are included in the covariance matrix $R_{I+N}$ estimated (calculated) by the covariance matrix estimation unit 12, on the basis of Equation 4

[Math. 4]

$$\tilde{\tilde{\mathbf{x}}}$$

received from the parameter averaging unit 14, as illustrated in Fig. 5(d).

The averaging process using Equation illustrated in Fig. 5(c) is performed, so that it is possible to obtain an effect equivalent to an increase in the number of samples that are used in the averaging process when estimating the covariance matrix $R_{I+N}$, and to improve the accuracy of estimating the covariance matrix $R_{I+N}$ based on the data signal.

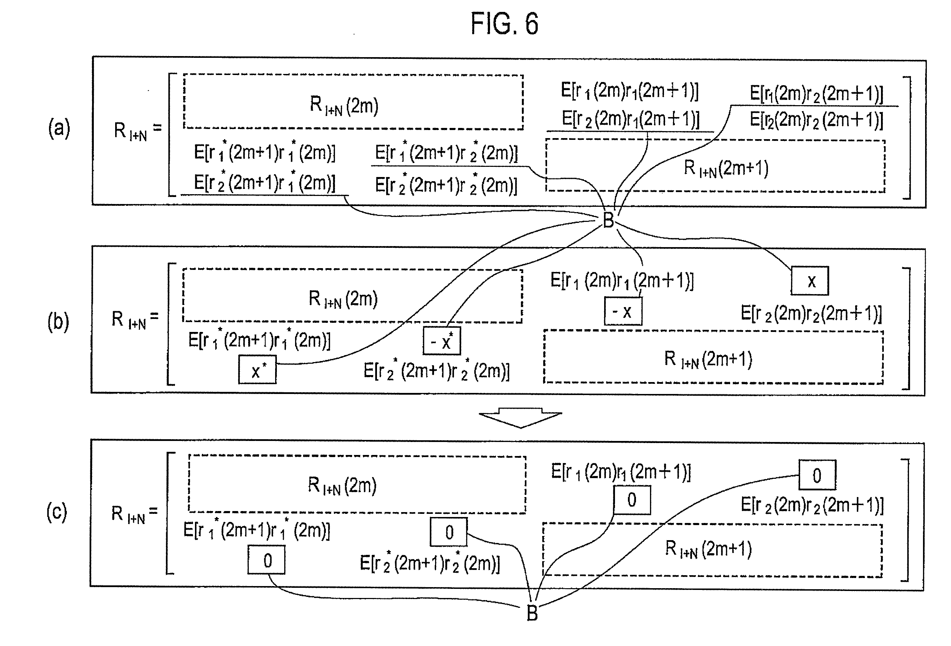

Alternatively, the covariance matrix generation unit 16 may also be configured to perform a process (a predetermined process) of inserting "0" into the elements B, which are included in the covariance matrix $R_{I+N}$ estimated (calculated) by the covariance matrix estimation unit 12, in response to the instruction from the 0-value insertion unit 15 as illustrated in Fig. 6(c).

The predetermined process illustrated in Fig. 6(c) is performed, that is, "0" is inserted into the elements B, so that it is possible to improve the accuracy of estimating the covariance matrix $R_{I+N}$ based on the data signal while reducing a calculation amount.

In addition, the covariance matrix generation unit 16 may also be configured to perform two or more combinations of the process illustrated in Fig. 2(c), the process illustrated in Fig. 4(b), the process illustrated in Fig. 5(d), and the process illustrated in Fig. 6(c).

The control signal demodulation unit 17 is configured to perform a demodulation process on a control signal received from the serving cell (cell 1).

The IRC reception weight generation unit 18 is configured to generate an IRC reception weight $W_{IRC}$ on the basis of the channel matrix H received from the channel estimation unit 11, the control signal received from the control signal demodulation unit 15, and the covariance matrix $R_{I+N}$ (the covariance matrix $R_{I+N}$ subjected to the predetermined process) received from the covariance matrix generation unit 16.

Specifically, the IRC reception weight generation unit 18 is configured to substitute the channel matrix H received from the channel estimation unit 11 and the covariance matrix $R_{I+N}$ received from the covariance matrix generation unit 16 into Equation illustrated in Fig. 10(a), so as to generate the IRC reception weight $W_{IRC}$.

The signal separation unit 19 is configured to perform a signal separation process on a received signal from the serving cell (cell 1) on the basis of the control signal received from the control signal demodulation unit 17 and the IRC reception weight $W_{IRC}$ received from the IRC reception weight generation unit 18.

The demodulation unit 20 is configured to perform a demodulation process on a signal received from the signal separation unit 19 on the basis of the control signal received from the control signal demodulation unit 17 and the IRC reception weight $W_{IRC}$ received from the IRC reception weight generation unit 18 so as to output a data signal.

In accordance with the IRC receiver 10 according to the present embodiment, it is possible to improve the accuracy of estimating the covariance matrix $R_{I+N}$ based on the data signal by using the process illustrated in Fig. 2(c), the process illustrated in Fig. 4(b), the process illustrated in Fig. 5(d), the process illustrated in Fig. 6(c), and the like.

In the aforementioned embodiment, an example, in which the number of antennas of the IRC receiver 10 is "2", has been described. However, the present invention can be performed regardless of the number of the antennas of the IRC receiver 10.

The characteristics of the present embodiment as described above may be expressed as follows:

A first characteristic of the present embodiment is summarized that an IRC receiver 10, which receives a data signal and a control signal transmitted using an SFBC (Space Frequency Block Coding) scheme, includes: a covariance matrix estimation unit 12 that estimates a covariance matrix $R_{I+N}$ on the basis of the data signal; a covariance matrix averaging unit 13 and a covariance matrix generation unit 16 that perform a predetermined process on the estimated covariance matrix $R_{I+N}$; an IRC reception weight generation unit 18 that generates an IRC reception weight $W_{IRC}$ by using the covariance matrix $R_{I+N}$ subjected to the predetermined process and the control signal; and a signal separation unit 19 that separates the data signal from a received signal by using the generated IRC reception weight $W_{IRC}$ and the control signal, wherein the data signal is configured to be transmitted in an SFBC pair (Space Frequency Block Coding scheme unit) including two resource elements, the estimated covariance matrix $R_{I+N}$ is configured to include a first covariance matrix $R_{I+N}$ (2m) including a desired signal component in even-numbered resource elements in the SFBC pair and a second covariance matrix $R_{I+N}$ (2m+1) including a desired signal component in odd-numbered resource elements in the SFBC pair, and the covariance matrix averaging unit 13 and the covariance matrix generation unit 16 are configured to perform, as the aforementioned predetermined process, an averaging process on each of elements in the first covariance matrix $R_{I+N}$ (2m) and elements in the second covariance matrix $R_{I+N}$ (2m+1).

A second characteristic of the present embodiment is summarized that an IRC receiver 10, which receives a data signal and a control signal transmitted using an SFBC scheme, includes: a covariance matrix estimation unit 12 that estimates a covariance matrix $R_{I+N}$ on the basis of the data signal; a 0-value insertion unit 15 and a covariance matrix generation unit 16 that perform a predetermined process on the estimated covariance matrix $R_{I+N}$; an IRC reception weight generation unit 18 that generates an IRC reception weight $W_{IRC}$ by using the covariance matrix $R_{I+N}$ subjected to the predetermined process and the control signal; and a signal separation unit 19 that separates the data signal from a received signal by using the generated IRC reception weight $W_{IRC}$ and the control signal, wherein the 0-value insertion unit 15 and the covariance matrix generation unit 16 are configured to perform, as the aforementioned predetermined process, a process of inserting "0" into elements A, which are theoretically to "0" when channel variation is ignored, in the estimated covariance matrix $R_{I+N}$.

A third characteristic of the present embodiment is summarized that an IRC receiver 10, which receives a data signal and a control signal transmitted using an SFBC scheme, include: a covariance matrix estimation unit 12 that estimates a covariance matrix $R_{I+N}$ on the basis of the data signal; a parameter averaging unit 14 and a covariance matrix generation unit 16 that perform a predetermined process on the estimated covariance matrix $R_{I+N}$; an IRC reception weight generation unit 18 that generates an IRC reception weight $W_{IRC}$ by using the covariance matrix $R_{I+N}$ subjected to the predetermined process and the control signal; and a signal separation unit 19 that separates the data signal from a received signal by using the generated IRC reception weight $W_{IRC}$ and the control signal, wherein the parameter averaging unit 14 and the covariance matrix generation unit 16 are configured to perform, as the aforementioned predetermined process, an averaging process among elements B, which are theoretically expressed by one parameter x when channel variation is ignored, in the estimated covariance matrix $R_{I+N}$.

A fourth characteristic of the present embodiment is summarized that an IRC receiver 10, which receives a data signal and a control signal transmitted using an SFBC scheme, includes: a covariance matrix estimation unit 12 that estimates a covariance matrix $R_{I+N}$ on the basis of the data signal; a 0-value insertion unit 15 and a covariance matrix generation unit 16 that perform a predetermined process on the estimated covariance matrix $R_{I+N}$; an IRC reception weight generation unit 18 that generates an IRC reception weight $W_{IRC}$ by using the covariance matrix $R_{I+N}$ subjected to the predetermined process and the control signal; and a signal separation unit 19 that separates the data signal from a received signal by using the generated IRC reception weight $W_{IRC}$ and the control signal, wherein the 0-value insertion unit 15 and the covariance matrix generation unit 16 are configured to perform, as the aforementioned predetermined process, a process of inserting "0" into an element, which is theoretically expressed by one parameter x when channel variation is ignored, in the estimated covariance matrix $R_{I+N}$.

In addition, the operation of the above-mentioned IRC receiver 10 may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the IRC receiver 10. Furthermore, such a storage medium and processor may be arranged in the IRC receiver 10 as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

In addition, the entire content of Japanese Patent Application No. 2011-242911 (filed on November 4, 2011) is incorporated in the present specification by reference.

[Industrial Applicability]

As described above, according to the present invention, it is possible to provide a receiver capable of improving the accuracy of estimating a covariance matrix $R_{I+N}$ based on a data signal.

[Reference Signs List]

10 ... IRC receiver
11 ... Channel estimation unit
12 ... Covariance matrix estimation unit
13 ... Covariance matrix averaging unit
14 ... Parameter averaging unit
15 ... 0-value insertion unit
16 ... Covariance matrix generation unit
17 ... Control signal demodulation unit
18 ... IRC reception weight generation unit
19 ... Signal separation unit
20 ... Demodulation unit

**Claims**

1.  A receiver, which receives a data signal and a control signal transmitted using a space frequency block coding scheme, comprising:

    a covariance matrix estimation unit that estimates a covariance matrix on the basis of the data signal;
    a covariance matrix generation unit that performs a predetermined process on the estimated covariance matrix;
    a reception weight generation unit that generates a reception weight by using the covariance matrix subjected to the predetermined process and the control signal; and
    a signal separation unit that separates the data signal from a received signal by using the generated reception weight and the control signal,

wherein the data signal is configured to be transmitted in a space frequency block coding scheme unit including two resource elements,

the estimated covariance matrix is configured to include a first covariance matrix including a desired signal component in an even-numbered resource element in the space frequency block coding scheme unit and a second covariance matrix including a desired signal component in an odd-numbered resource element in the space frequency block coding scheme unit, and

the covariance matrix generation unit is configured to perform, as the predetermined process, an averaging process on each of elements in the first covariance matrix and elements in the second covariance matrix.

2. A receiver, which receives a data signal and a control signal transmitted using a space frequency block coding scheme, comprising:

a covariance matrix estimation unit that estimates a covariance matrix on the basis of the data signal;

a covariance matrix generation unit that performs a predetermined process on the estimated covariance matrix;

a reception weight generation unit that generates a reception weight by using the covariance matrix subjected to the predetermined process and the control signal; and

a signal separation unit that separates the data signal from a received signal by using the generated reception weight and the control signal,

wherein the covariance matrix generation unit is configured to perform, as the predetermined process, a process of inserting "0" into an element, which is theoretically to "0", when channel variation is ignored, in the estimated covariance matrix.

3. A receiver, which receives a data signal and a control signal transmitted using a space frequency block coding scheme, comprising:

a covariance matrix estimation unit that estimates a covariance matrix on the basis of the data signal;

a covariance matrix generation unit that performs a predetermined process on the estimated covariance matrix;

a reception weight generation unit that generates a reception weight by using the covariance matrix subjected to the predetermined process and the control signal; and

a signal separation unit that separates the data signal from a received signal by using the generated reception weight and the control signal,

wherein the covariance matrix generation unit is configured to perform, as the predetermined process, an averaging process among elements, which are theoretically expressed by one parameter, when channel variation is ignored, in the estimated covariance matrix.

4. A receiver, which receives a data signal and a control signal transmitted using a space frequency block coding scheme, comprising:

a covariance matrix estimation unit that estimates a covariance matrix on the basis of the data signal;

a covariance matrix generation unit that performs a predetermined process on the estimated covariance matrix;

a reception weight generation unit that generates a reception weight by using the covariance matrix subjected to the predetermined process and the control signal; and

a signal separation unit that separates the data signal from a received signal by using the generated reception weight and the control signal,

wherein the covariance matrix generation unit is configured to perform, as the predetermined process, a process of inserting "0" into an element, which is theoretically expressed by one parameter, when channel variation is ignored, in the estimated covariance matrix.

EP 2 775 647 A1

# FIG. 1

CRS → **CHANNEL ESTIMATION UNIT** 11 — CHANNEL MATRIX H

**COVARIANCE MATRIX AVERAGING UNIT** 13

PART OF COVARIANCE MATRIX $\hat{R}_{I+N}(2m)$, $\hat{R}_{I+N}(2m+1)$

**PARAMETER AVERAGING UNIT** 14

PARAMETER $\hat{x}$ 15

**0-VALUE INSERTION UNIT**

0 VALUE 16

12

COVARIANCE MATRIX $R_{I+N}$

**COVARIANCE MATRIX ESTIMATION UNIT** → **COVARIANCE MATRIX GENERATION UNIT**

10

17 CONTROL SIGNAL 18 COVARIANCE MATRIX $R_{I+N}$

CONTROL SIGNAL → **CONTROL SIGNAL DEMODULATION UNIT** → **IRC RECEPTION WEIGHT GENERATION UNIT**

CONTROL SIGNAL IRC RECEPTION WEIGHT $W_{IRC}$

RECEIVED SIGNAL → **SIGNAL SEPARATION UNIT** → **DEMODULATION UNIT** 20 → DATA SIGNAL

19

# FIG. 2

(a)

$$R_{I+N} = \begin{bmatrix} \boxed{R_{I+N}(2m)} & \begin{matrix} E[r_1(2m)r_1(2m+1)] & E[r_1(2m)r_2(2m+1)] \\ E[r_2(2m)r_1(2m+1)] & E[r_2(2m)r_2(2m+1)] \end{matrix} \\ \begin{matrix} E[r_1^*(2m+1)r_1^*(2m)] & E[r_1^*(2m+1)r_2^*(2m)] \\ E[r_2^*(2m+1)r_1^*(2m)] & E[r_2^*(2m+1)r_2^*(2m)] \end{matrix} & \boxed{R_{I+N}(2m+1)} \end{bmatrix}$$

(b)

$$\begin{cases} \hat{R}_{I+N}(2m) = \dfrac{R_{I+N}(2m) + R_{I+N}^*(2m+1)}{2} \\ \hat{R}_{I+N}(2m+1) = \hat{R}_{I+N}^*(2m) \end{cases}$$

(c)

$$R_{I+N} = \begin{bmatrix} \boxed{\hat{R}_{I+N}(2m)} & \begin{matrix} E[r_1(2m)r_1(2m+1)] & E[r_1(2m)r_2(2m+1)] \\ E[r_2(2m)r_1(2m+1)] & E[r_2(2m)r_2(2m+1)] \end{matrix} \\ \begin{matrix} E[r_1^*(2m+1)r_1^*(2m)] & E[r_1^*(2m+1)r_2^*(2m)] \\ E[r_2^*(2m+1)r_1^*(2m)] & E[r_2^*(2m+1)r_2^*(2m)] \end{matrix} & \boxed{\hat{R}_{I+N}(2m+1)} \end{bmatrix}$$

EP 2 775 647 A1

**FIG. 3**

$$R_{I+N} = E[\,r(k,l)\,r^H(k,l)\,]$$

$$= E\left[\begin{bmatrix} r_1(2m) \\ r_2(2m) \\ r_1^*(2m+1) \\ r_2^*(2m+1) \end{bmatrix}\begin{bmatrix} r_1(2m) \\ r_2(2m) \\ r_1^*(2m+1) \\ r_2^*(2m+1) \end{bmatrix}^H\right]$$

$$= E\left[\begin{matrix} |r_1(2m)|^2 & r_1(2m)r_2^*(2m) & r_1(2m)r_1(2m+1) & r_1(2m)r_2(2m+1) \\ r_2(2m)r_1^*(2m) & |r_2(2m)|^2 & r_2(2m)r_1(2m+1) & r_2(2m)r_2(2m+1) \\ r_1^*(2m+1)r_1^*(2m) & r_1^*(2m+1)r_2^*(2m) & |r_1(2m+1)|^2 & r_1^*(2m+1)r_2(2m+1) \\ r_2^*(2m+1)r_1^*(2m) & r_2^*(2m+1)r_2^*(2m) & r_2^*(2m+1)r_1(2m+1) & |r_2(2m+1)|^2 \end{matrix}\right]$$

$$= \begin{bmatrix} R_{I+N}(2m) & \begin{matrix} E[r_1(2m)r_1(2m+1)] & E[r_1(2m)r_2(2m+1)] \\ E[r_2(2m)r_1(2m+1)] & E[r_2(2m)r_2(2m+1)] \end{matrix} \\ \begin{matrix} E[r_1^*(2m+1)r_1^*(2m)] & E[r_1^*(2m+1)r_2^*(2m)] \\ E[r_2^*(2m+1)r_1^*(2m)] & E[r_2^*(2m+1)r_2^*(2m)] \end{matrix} & R_{I+N}(2m+1) \end{bmatrix}$$

$$= \begin{bmatrix} R_{I+N}(2m) & \begin{matrix} 0 & x \\ -x & 0 \end{matrix} \\ \begin{matrix} 0 & -x^* \\ x^* & 0 \end{matrix} & R_{I+N}(2m+1) \end{bmatrix}$$

$E[\ ]$ : AVERAGING PROCESS

A

FIG. 4

(a)

$$R_{I+N} = \begin{bmatrix} R_{I+N}(2m) & \begin{array}{cc} E[r_1(2m)r_1(2m+1)] & E[r_1(2m)r_2(2m+1)] \\ E[r_2(2m)r_1(2m+1)] & E[r_2(2m)r_2(2m+1)] \end{array} \\ \begin{array}{cc} E[r_1^*(2m+1)r_1^*(2m)] & E[r_1^*(2m+1)r_2^*(2m)] \\ E[r_2^*(2m+1)r_1^*(2m)] & E[r_2^*(2m+1)r_2^*(2m)] \end{array} & R_{I+N}(2m+1) \end{bmatrix}$$

A

(b)

$$R_{I+N} = \begin{bmatrix} R_{I+N}(2m) & \begin{array}{cc} \boxed{0} & E[r_1(2m)r_2(2m+1)] \\ E[r_2(2m)r_1(2m+1)] & \boxed{0} \end{array} \\ \begin{array}{cc} \boxed{0} & E[r_1^*(2m+1)r_2^*(2m)] \\ E[r_2^*(2m+1)r_1^*(2m)] & \boxed{0} \end{array} & R_{I+N}(2m+1) \end{bmatrix}$$

A

EP 2 775 647 A1

12

# FIG. 5

(a) $R_{I+N} = \begin{bmatrix} R_{I+N}(2m) & E[r_1(2m)r_1(2m+1)] & E[r_1(2m)r_2(2m+1)] \\ & E[r_2(2m)r_1(2m+1)] & E[r_2(2m)r_2(2m+1)] \\ E[r_1^*(2m+1)r_1^*(2m)] & E[r_1^*(2m+1)r_2^*(2m)] & R_{I+N}(2m+1) \\ E[r_2^*(2m+1)r_1^*(2m)] & E[r_2^*(2m+1)r_2^*(2m)] & \end{bmatrix}$

B

(b) $R_{I+N} = \begin{bmatrix} R_{I+N}(2m) & E[r_1(2m)r_1(2m+1)] & \boxed{x} \\ & \boxed{-x} & E[r_2(2m)r_2(2m+1)] \\ E[r_1^*(2m+1)r_1^*(2m)] & \boxed{-x^*} & R_{I+N}(2m+1) \\ \boxed{x^*} & E[r_2^*(2m+1)r_2^*(2m)] & \end{bmatrix}$

(c) $\hat{x} = \dfrac{x + (-1)(-x) + (-1)(-x^*)^* + (x^*)^*}{4} \quad \text{or} \quad \hat{x} = \dfrac{x + (-1)(-x)}{2}$

(d) $R_{I+N} = \begin{bmatrix} R_{I+N}(2m) & E[r_1(2m)r_1(2m+1)] & \boxed{\hat{x}} \\ & \boxed{-\hat{x}} & E[r_2(2m)r_2(2m+1)] \\ E[r_1^*(2m+1)r_1^*(2m)] & \boxed{-\hat{x}^*} & R_{I+N}(2m+1) \\ \boxed{\hat{x}^*} & E[r_2^*(2m+1)r_2^*(2m)] & \end{bmatrix}$

B

EP 2 775 647 A1

FIG. 6

EP 2 775 647 A1

# FIG. 7

(a)

PRECODING BEAM #1 ADDRESSED TO
UE #1 CONNECTED TO ANOTHER CELL

PRECODING BEAM #2 ADDRESSED TO
UE #2 CONNECTED TO ANOTHER CELL

INTERFERENCE SIGNAL TO IRC RECEIVER 10

eNB#1

UE#1

eNB#2

UE#2

DESIRED SIGNAL
TO IRC RECEIVER 10

10
IRC RECEIVER

FORM NULL TO INTERFERENCE SIGNAL

(b)

FREQUENCY

RB BANDS
(12 SUBCHANNELS)

CRS

DATA SIGNAL

CONTROL SIGNAL

1 SUBFRAME (14 OFDM SYMBOLS)

TIME

EP 2 775 647 A1

# FIG. 8

# FIG. 9

(a)

RECEIVED SIGNAL IN EVEN-NUMBERED RES OF SFBC PAIR

$$r_1(2m) = h_{11,1} s_1(2m) + h_{12,1} s_1(2m+1) + h_{11,2} s_2(2m) + h_{12,2} s_2(2m+1) + n_1(2m)$$
$$r_2(2m) = h_{21,1} s_1(2m) + h_{22,1} s_1(2m+1) + h_{21,2} s_2(2m) + h_{22,2} s_2(2m+1) + n_2(2m)$$

RECEIVED SIGNAL IN ODD-NUMBERED RES OF SFBC PAIR

$$r_1^*(2m+1) = h_{12,1}^* s_1(2m) - h_{11,1}^* s_1(2m+1) + h_{12,2}^* s_2(2m) - h_{11,1}^* s_2(2m+1) + n_1(2m+1)$$
$$r_2^*(2m+1) = h_{22,1}^* s_1(2m) - h_{21,1}^* s_1(2m+1) + h_{22,2}^* s_2(2m) - h_{21,1}^* s_2(2m+1) + n_2(2m+1)$$

(b)

$$\begin{bmatrix} r_1(2m) \\ r_2(2m) \\ r_1^*(2m+1) \\ r_2^*(2m+1) \end{bmatrix} = \begin{bmatrix} h_{11,1} & h_{12,1} \\ h_{21,1} & h_{22,1} \\ h_{12,1}^* & -h_{11,1}^* \\ h_{22,1}^* & -h_{21,1}^* \end{bmatrix} \begin{bmatrix} s_1(2m) \\ s_1(2m+1) \end{bmatrix} + \begin{bmatrix} h_{11,2} & h_{12,2} \\ h_{21,2} & h_{22,2} \\ h_{12,2}^* & -h_{11,2}^* \\ h_{22,2}^* & -h_{21,2}^* \end{bmatrix} \begin{bmatrix} s_2(2m) \\ s_2(2m+1) \end{bmatrix} + \begin{bmatrix} n_1(2m) \\ n_2(2m) \\ n_1(2m+1) \\ n_2(2m+1) \end{bmatrix}$$

(c)

$$r(m) = h_1 s_1(m) + h_2 s_2(m) + n(m)$$

m: SFBC SYMBOL NUMBER → SUBCARRIER k AND OFDM SYMBOL NUMBER ARE DETERMINED IN RESPONSE TO VALUE OF M
ri(2m), ri(2m+1): EVEN-NUMBERED AND ODD-NUMBERED RECEIVED SIGNALS IN SFBC PAIR IN i-TH RECEPTION ANTENNA
ni(2m), ni(2m+1): EVEN-NUMBERED AND ODD-NUMBERED INTERFERENCE SIGNALS IN SFBC PAIR IN i-TH RECEPTION ANTENNA
sq(2m), sq(2m+1): EVEN-NUMBERED AND ODD-NUMBERED TRANSMITTED SIGNALS IN SFBC PAIR IN q-TH RECEPTION ANTENNA
hij,q: CHANNEL ESTIMATED VALUES IN i-TH RECEPTION ANTENNA, j-TH TRANSMISSION ANTENNA, AND Q-TH CELL

FIG. 10

(a) $\boxed{W_{IRC}(k,\,l)=H_1^H(k,\,l)\,R_{I+N}^{-1}}$

(c) $\boxed{R_{I+N}=\dfrac{1}{N_{SP}}\sum_{k,l\in CRS}r(k,\,l)\,r(k,\,l)^H}$

| | | |
|---|---|---|
| $k$ : SUBCARRIER INDEX | $H_1$ : CHANNEL MATRIX OF CONNECTED CELLS | $N_{SP}$ : AVERAGED SAMPLE NUMBER |
| $l$ : OFDM SYMBOL INDEX | $r$ : RECEIVED SIGNAL VECTOR | $H$ : HERMITIAN TRANSPOSITION |
| $W_{IRC}$ : IRC RECEPTION WEIGHT MATRIX | $d_1$ : RS SIGNAL VECTOR OF CONNECTED CELL | $P_1$ : TRANSMISSION POWER OF CONNECTED CELL |

EP 2 775 647 A1

# FIG. 11

SERVING CELL

FREQUENCY →

TIME →

INTERFERENCE CELL #1

INTERFERENCE CELL #2

SFBC PAIR

- GENERATE COVARIANCE MATRIX ON THE BASIS OF RECEIVED DATA SIGNAL
  - TO REMOVE CRS INTERFERENCE, AVERAGE BY USING ONLY OFDM SYMBOL INTO WHICH CRS IS NOT INSERTED
  - SEPARATE EVEN-NUMBERED AND ODD-NUMBERED RES OF SFBC PAIR TO AVERAGE COVARIANCE MATRIX

$$R_{I+N} = \frac{1}{N_{sp}} \sum_{m=(k,l) \in PDSCH} \begin{bmatrix} r_1(2m,l) \\ r_2(2m,l) \\ r_1^*(2m+1,l) \\ r_2^*(2m+1,l) \end{bmatrix} \begin{bmatrix} r_1(2m,l) \\ r_2(2m,l) \\ r_1^*(2m+1,l) \\ r_2^*(2m+1,l) \end{bmatrix}^H$$

⬇

SFBC PAIR IS SEPARATED AND AVERAGED, RESULTING IN PROBLEM OF A FEW AVERAGED SAMPLES

※ IN THE ABOVE EXAMPLE, THERE ARE 96 RES PER 1 RB; HOWEVER, THE NO. OF AVERAGED SAMPLES COMES TO HALF THE NUMBER, I.E., 48 SAMPLES

EP 2 775 647 A1

<table>
<tr><td colspan="2" align="center">**INTERNATIONAL SEARCH REPORT**</td><td>International application No.<br><br>PCT/JP2012/078470</td></tr>
</table>

**A. CLASSIFICATION OF SUBJECT MATTER**
*H04J99/00*(2009.01)i, *H04B7/02*(2006.01)i, *H04B7/08*(2006.01)i, *H04J11/00*(2006.01)i

According to International Patent Classification (IPC) or to both national classification and IPC

**B. FIELDS SEARCHED**

Minimum documentation searched (classification system followed by classification symbols)
H04J99/00, H04B7/02, H04B7/08, H04J11/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
IEEE Xplore, CiNii

**C. DOCUMENTS CONSIDERED TO BE RELEVANT**

| Category* | Citation of document, with indication, where appropriate, of the relevant passages | Relevant to claim No. |
|---|---|---|
| A | Renesas Mobile Europe Ltd., Interference aware receiver modeling at system level, 3GPP TSG-RAN WG1#65, R1-111562, 2011.05.09 | 1-4 |
| A | NTT DOCOMO, Reference receiver structure for interference mitigation on Enhanced performance requirement for LTE UE, 3GPP TSG-RAN WG4#60Bis, R4-115213, 2011.10.10 | 1-4 |
| A | NTT DOCOMO, Influence of Channel Estimation Error on MMSE-IRC Receiver, 3GPP TSG-RAN WG1#65, R1-111639, 2011.05.09 | 1-4 |

☒ Further documents are listed in the continuation of Box C.　　☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06 December, 2012 (06.12.12) | Date of mailing of the international search report<br>18 December, 2012 (18.12.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/078470 |

C (Continuation).   DOCUMENTS CONSIDERED TO BE RELEVANT

| Category* | Citation of document, with indication, where appropriate, of the relevant passages | Relevant to claim No. |
|---|---|---|
| A | Yusuke OWATARI, Nobuhiko MIKI, Takahiro ASAI, Tetsushi ABE, Hidekazu TAOKA, "Investigation of Interference Rejection Combining Receiver to Suppress Inter-cell Interference in LTE-Advanced Downlink", IEICE Technical Report, 14 July 2011 (14.07.2011), RCS2011-80 | 1-4 |
| A | Yusuke OWATARI, Nobuhiko MIKI, Tetsushi ABE, Hidekazu TAOKA, "Investigation on Interference Rejection Combining Receiver in Asynchronous Network for LTE-Advanced Downlink", IEICE Technical Report, 19 October 2011 (19.10.2011), RCS2011-186 | 1-4 |
| A | Yusuke Ohwatari, Nobihiko Miki, Takahiro Asai, Tetsushi Abe, Hidekazu Taoka, Performance of Advanced Receiver Employing Interference Rejection Combining to Suppress Inter-Cell Interference in LTE-Advanced Downlink, Vehicular Technology Conference (VTC Fall), 2011 IEEE, 2011.09.05 | 1-4 |

Form PCT/ISA/210 (continuation of second sheet) (July 2009)

**EP 2 775 647 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011242911 A